# EUROPEAN PATENT APPLICATION

(11) **EP 2 209 028 A1**
(43) Date of publication of application: **21.07.2010**
(21) Application number: 09000436.7
(22) Date of filing: 14.01.2009
(51) Int. Cl.: G02B 6/00

(54) **Linear light source unit and image reader**

(71) Applicant: Ushio Denki Kabushiki Kaisha, Tokyo-to 100-8150 (JP); Colcoat Co., Ltd., Tokyo-to 143-0015 (JP)
(72) Inventor: Kabuki, Kiyoyuki, Himeji-shi, Hyogo-ken 671-0224 (JP); Hata, Hiroshige, Himeji-shi, Hyogo-ken 671-0224 (JP); Kamei, Koichi, Himeji-shi, Hyogo-ken 671-0224 (JP); Tabei, Tatsuya, Gyoda-shi Saitama-ken, 361-0033 (JP)
(74) Representative: Grünecker, Kinkeldey, Stockmair & Schwanhäusser Anwaltssozietät

(57) **Abstract**

Disclosed herein are a linear light source unit (10) equipped with a light guide (20) having a light intake part (21A) formed at one end surface thereof and a light-transmitting and reflecting surface (24) made up by a plurality of groove-like concave parts formed in parallel with one another and arranged in a longitudinal direction on a peripheral surface thereof, a light source (11) provided so as to be opposed to the light intake part (21A), and a reflecting plate (30) provided so as to be opposed to the light-transmitting and reflecting surface (24), wherein in the reflecting plate (30), a surface opposed to the light-transmitting and reflecting surface is a reflecting surface, in which irregularities have been formed in parallel with one another.

## Description

### BACKGROUND OF THE INVENTION

### Field of the Invention

The present invention relates to a linear light source unit and an image reader, and particularly to a linear light source unit used as a light source for illumination for an image reader provided in a facsimile, copying machine, image scanner, bar code reader or the like, and an image reader equipped with this linear light source unit.

### Description of the Related Art

In recent years, an unit equipped with an light emitting diode (hereinafter also referred to as "LED") as a light source has been widely used as a light source for illumination for an image reader provided in, for example, a facsimile from the viewpoint of miniaturization, saving of electric power consumed and because a CCD type sensor as a photo detector has been highly sensitized, and the output of the LED itself has been improved.

As the unit using such LED as a light source, is used a linear light source unit of the construction that point light from a light source composed of LED is converted to linear light by a light guide for the purpose of decreasing the number of LEDs used as the light source and achieving a uniform illuminance distribution on a surface to be illuminated.

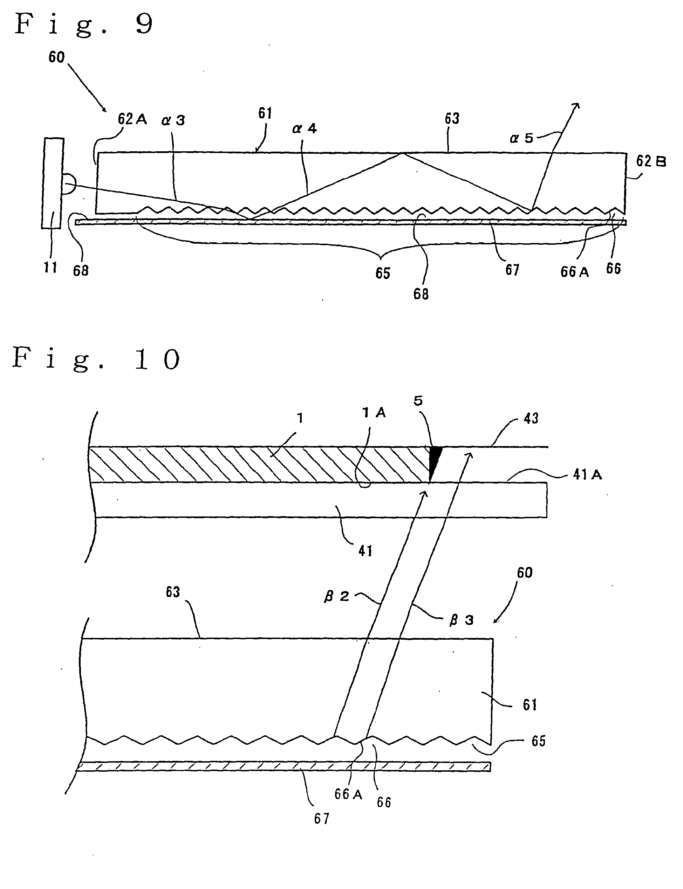

As illustrated in FIG. 9, a linear light source unit disclosed in Japanese laid-open patent publication 2003-115209, is equipped with a rod-like light guide 61 formed of, for example, a transparent resin, a light source 11 composed of LED and arranged in opposed relation to a light intake part formed by one end surface (left end surface in FIG. 9) 62A of the light guide 61, and a reflecting plate 67, whose reflecting surface 68 is formed on an inner surface thereof. The light guide 61 making up this linear light source unit is provided with a light-outgoing surface 63 perpendicular to the end surface 62A forming the light intake part and extending in a longitudinal direction (lateral direction in FIG. 9) and a light-transmitting and reflecting surface 65, in which a plurality of V-shaped grooves 66 arranged in the longitudinal direction is formed in opposed relation to the light-outgoing surface 63, on a peripheral surface thereof.

In this linear light source unit 60, the reflecting plate 67 has a U-shaped sectional form, is provided so as to cover other portions than the light-outgoing surface 63 in the peripheral surface of the light guide 61 and serves to reflect light (for example, light α3) passed through the light guide 61 by the reflecting surface 68, thereby guiding the reflected light (for example, light α4) to the interior of the light guide 61 to enhance the availability of the light from the light source 11.

In the linear light source unit 60 of such construction, the light from the light source 11 is introduced in the interior of the light guide 61 through the light intake part formed of the end surface 62A and finally reflected by the light-transmitting and reflecting surface 65 of the light guide 61, thereby emitting light (for example, light α5) from the light-outgoing surface 63.

However, in such a linear light source unit 60, the out-going light from the linear light source unit 60 is light reflected by an inclined face 66A of each of the plural V-shaped grooves 66 forming the light-transmitting and reflecting surface 65 of the light guide 61, so that the light-outgoing direction is different from a direction perpendicular to the light-outgoing surface 63 of the light guide 61, and the light is emitted in a direction inclined on the side of an end surface 62B (right end surface in FIG. 9) opposed to the end surface 62A compared with the perpendicular direction. Therefore, when this linear light source unit 60 is used as a light source for illumination for an image reader, there arises a problem that black stripes, which are not present in an object of image reading, occur in a resulting read image due to the shade of an object of image reading to cause a possibility that high quality may not be achieved. Such a problem is marked in the case where the object of image reading has a large thickness.

The reason why the black stripes occur in the resulting read image is specifically explained with reference to an image reader illustrated in FIG. 10.

This image reader has such construction that an object 1 of image reading is placed on a plate-like table 41 composed of, for example, a light-transmitting member with an image-reading surface 1A of the object downward, this object 1 of image reading is pressed by a cover 43 for object of image reading, and in this state, the object 1 of image reading is illuminated by light from a light source of illumination composed of the linear light source unit 60 provided below the table 41. In the image reader of such construction, a projected image of the image-reading surface 1A of the object coming into contact with an upper surface (upper surface in FIG. 10) 41A of the table 41 in the object 1 of image reading is detected, thereby providing a read image.

In such an image reader, the light from the linear light source unit 60 is struck on the object 1 of image reading slantingly, not perpendicularly to the object 1 of image reading, and the object 1 of image reading does not have light transmission property, so that light β2 struck on an end portion of the image-reading surface 1A of the object 1 on the table 41 is struck on only a peripheral portion of the object 1 of image reading in a lower surface (lower surface in FIG. 10) of the cover 43 for object of image reading and is not stuck on neighboring portions thereof. In addition, the neighboring portions are not illuminated by light (for example, light β3) directly struck on the lower surface of the cover 43 for object of image reading, so that a portion (region 5 in FIG. 10), which is not illuminated by light, occurs in another region than a region coming into contact with the object 1 of image reading on the lower surface of the cover 43 for object of image reading. As a result, the shade of the object 1 of image reading occurs on the lower surface of the cover 43 for object of image reading, and this shade appears as a black stripe in the read image.

### SUMMARY OF THE INVENTION

The present invention has been made in view of the foregoing circumstances and has as its object the provision of a linear light source unit which has the construction that light from a light source is introduced into a light guide, and the light is emitted from a light-outgoing surface of the light guide and can control a light-outgoing direction of the light guide, thereby emitting the light in a direction perpendicular to the light-outgoing surface of the light guide.

Another object of the present invention is to provide an image reader, which can provide a read image having high quality, even when an object of image reading has a large thickness.

A linear light source unit according to the present invention is a linear light source unit comprising a light guide having a light intake part formed at one end surface thereof and a light-transmitting and reflecting surface made up by a plurality of groove-like concave parts formed in parallel with one another and arranged in a longitudinal direction on a peripheral surface thereof, a light source provided so as to be opposed to the light intake part, and a reflecting plate provided so as to be opposed to the light-transmitting and reflecting surface of the light guide,
wherein in the reflecting plate, a surface opposed to the light-transmitting and reflecting surface is a reflecting surface, in which irregularities have been formed in parallel with one another.

In the linear light source unit according to the present invention, the light-transmitting and reflecting surface of the light guide may preferably transmit at least 60% of the quantity of light of the light incident on the light guide from the light source.

In the linear light source unit according to the present invention, the irregularities in the reflecting surface of the reflecting plate may preferably be composed of groove-like concave parts each having an opening width of 0.1 to 10 µm.

In the linear light source unit according to the present invention, the light reflected by the reflecting plate may preferably be great in the quantity of light in a direction toward the light intake part compared with the light reflected by the light-transmitting and reflecting surface of the light guide.

In the linear light source unit according to the present invention, an end surface opposed to the light intake part in the light guide may preferably have reflecting property.

An image reader according to the present invention comprises the above-described linear light source unit as a light source for illumination.

According to the linear light source unit of the present invention, the light-transmitting and reflecting surface of the light guide has light transmission property, the reflecting plate is equipped with the reflecting surface, in which the irregularities have been formed in parallel with one another, and the linear light source unit is so constructed that light including a light component reflected by the light-transmitting and reflecting surface of the light guide and a light component passed through the reflecting surface of the light guide and reflected by the reflecting plate, thereby being introduced in the interior of the light guide, is emitted as linear light from a light-outgoing surface in the light guide, so that even when the light component reflected by the light-transmitting and reflecting surface of the light guide has directivity in a direction inclined on the side of the end surface opposed to the end surface forming the light intake part of the light guide compared with a direction perpendicular to the light-outgoing surface of the light guide, the light-outgoing direction of the light emitted from the light-outgoing surface of the light guide can be controlled by complementing a light component having directivity in a direction inclined on the side opposed to the light component reflected by the light-transmitting and reflecting surface of the light guide, i.e., in a direction inclined on the side of the end surface forming the light intake part of the light guide by reflected light from the reflecting plate, thereby emitting the light in a direction perpendicular to the light-outgoing surface of the light guide.

According to the image reader of the present invention, since the above-described linear light source unit according to the present invention is used as the light source for illumination, light struck on an image-reading surface of an object of image reading from the light source for illumination is controlled so as to have an illuminating direction in a direction perpendicular to the image-reading surface of the object, so that the resulting read image is prevented from causing black stripes, which are not present in the object of image reading, due to the shade of the object of image reading even when the object of image reading has a large thickness, and so a read image having high quality can be provided.

Further features of the present invention will become apparent from the following description of exemplary embodiments with reference to the attached drawings.

### BRIEF DESCRIPTION OF THE DRAWINGS

FIG. 1 is a perspective view illustrating the construction of an exemplary linear light source unit according to the present invention.

FIG. 2 is a cross-sectional view illustrating, on an enlarged scale, a section in a longitudinal direction of the linear light source unit in FIG. 1.

FIG. 3 is a cross-sectional view illustrating, on an enlarged scale, a groove-like concave part in a reflecting surface of a reflecting plate making up the linear light source unit in FIG. 1.

FIG. 4 illustrates a case where a ratio (H2/D2) of a maximum depth H2 to an opening width D2 in the groove-like concave part in the reflecting surface of the reflecting plate is less than 1/3.

FIG. 5 illustrates a case where the ratio (H2/D2) of the maximum depth H2 to the opening width D2 in the groove-like concave part in the reflecting surface of the reflecting plate exceeds 1.

FIG. 6 illustrates the construction of an exemplary image reader according to the present invention.

FIG. 7 is a perspective view illustrating the construction of another exemplary reflecting plate making up the linear light source unit according to the present invention.

FIG. 8 is a cross-sectional view illustrating, on an enlarged scale, a groove-like concave part in a reflecting surface of the reflecting plate making up the linear light source unit in FIG. 7.

FIG. 9 illustrates the construction of an exemplary conventional linear light source unit.

FIG. 10 illustrates the construction of an exemplary image reader equipped with the linear light source unit in FIG. 9 as a light source for illumination.

### DESCRIPTION OF THE EMBODIMENTS

The present invention will hereinafter be described in details.

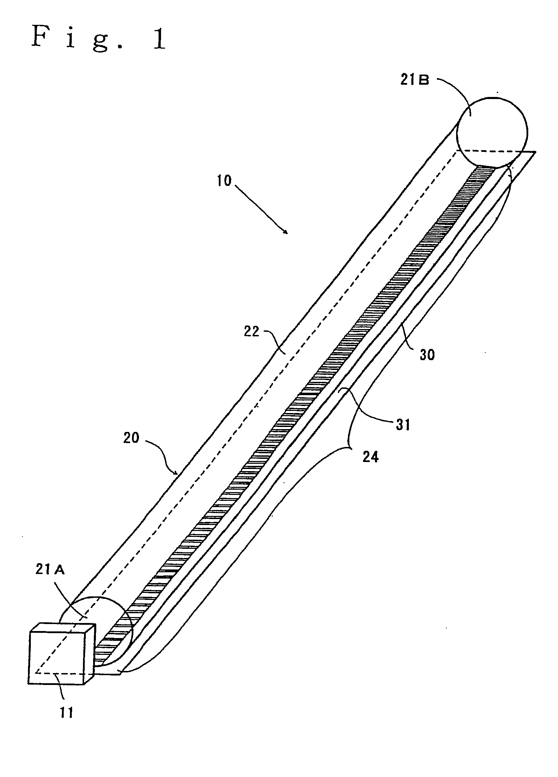

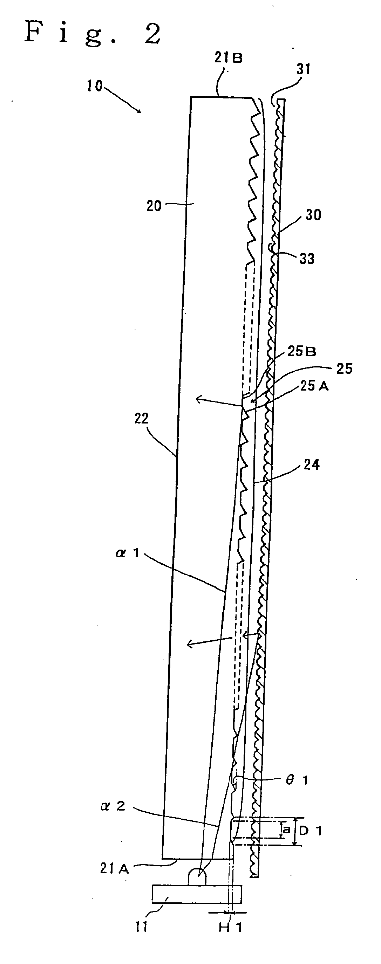

FIG. 1 is a perspective view illustrating the construction of an exemplary linear light source unit according to the present invention, and FIG. 2 is a cross-sectional view illustrating, on an enlarged scale, a section in a longitudinal direction of the linear light source unit in FIG. 1.

This linear light source unit 10 is equipped with a columnar light guide 20 composed of, for example, a transparent resin such as an acrylic resin and having light transmission property, a light source 11 composed of LED and arranged in opposed relation to a light intake part formed by one end surface (lower end surface in FIG. 1 and FIG. 2; hereinafter also referred to as "light intake end surface") 21A of the light guide 20, and a reflecting plate 30, in which a reflecting surface 31 is formed on a front surface (an upper surface in FIG. 1 and a left surface in FIG. 2) thereof.

In the drawings, the other end surface (hereinafter referred to as "the other end surface") 21B of the light guide 20 is made flat and smooth and has reflecting property.

The light source 11 is equipped with, for example, a blue LED device and emits white light by converting blue light emitted from the blue LED device by a phosphor layer.

The light source 11 may be made up by one or plural LED devices. Even when the light source is composed of plural LED devices, and the respective LED devices vary in light output from each other, an evil attributable to a scatter of light output in the plural LED devices is not exerted because the linear light source unit 10 has the construction that light from the light source 11 is not directly emitted, but emitted through the light guide 20.

On a peripheral surface of the light guide 20, are provided a light-outgoing surface 22 crossed at right angle with the light intake end surface 21A and the other end surface 21B and extending in a longitudinal direction (vertical direction in FIG. 2), and a light-transmitting and reflecting surface 24 having light transmission property, in which a plurality of groove-like concave parts 25 has been formed in parallel with one another and arranged in the longitudinal direction so as to oppose to the light-outgoing surface 22.

Each of the plural groove-like concave parts 25 making up the light-transmitting and reflecting surface 24 of the light guide 20 has a form extending in a radial direction (direction perpendicular to the paper in FIG. 2) of the light guide 20 and having an inclined face (hereinafter also referred to as "light-reflecting inclined face") 25A on at least the side of the light intake end surface 21A for reflecting the light introduced in the interior of the light guide 20 from the light source 11 toward the light-outgoing surface 22.

In the illustrated embodiment, the plural groove-like concave parts 25 are continuously formed without separating adjoining groove-like concave parts 25 from each other, the bottom face 25B of each of the groove-like concave parts 25 is made flat and smooth, and the section of the concave part is in a substantially trapezoidal form. In these plural groove-like concave parts 25, the inclination angles θ1 of the respective light-reflecting inclined faces 25A are the same as one another. However, the widths a of the bottom faces 25B and the opening widths D1 thereof become smaller and the maximum depths H1 thereof become greater as going toward the other end surface 21B from the light intake end surface 21A.

In the linear light source unit 10, when the light from the light source 11 is introduced in the interior of the light guide 20 through the light intake part composed of the end surface 21A and reaches the light-transmitting and reflecting surface 24, a light component, the angle of incidence on the light-reflecting inclined face 25A in the groove-like concave part 25 of which exceeds a critical angle, among the light is reflected by the light-reflecting inclined face 25A and emitted from the light-outgoing surface 22 to the outside. On the other hand, a light component, the angle of incidence on the light-reflecting inclined face 25A in the groove-like concave part 25 of which is not wider than the critical angle, passes through the light guide 20 from the light-reflecting inclined face 25A. A light component incident in another region than the light-reflecting inclined face 25A of the groove-like concave part 25 in the light-transmitting and reflecting surface 24 is totally reflected and propagates in the longitudinal direction through the interior of the light guide 20 without being emitted to the outside.

In the groove-like concave part 25, the inclination angle θ1 of the light-reflecting inclined face 25A is preferably at least 35°, particularly preferably 40 to 60°.

When the inclination angle θ1 of the light-reflecting inclined face 25A is too small, there is a possibility that sufficient light transmission property may not be achieved in the light-transmitting and reflecting surface 24 of the light guide 20.

The light guide 20 preferably has a light transmittance of at least 60%, particularly at least 70% of the quantity of light of the incident light from the light source 11 is transmitted.

If the light transmittance of the light-transmitting and reflecting surface 24 is too small, the quantity of light of the light reflected by the reflecting plate 30 becomes small, so that a light component having directivity in a direction opposed to a light component reflected by the light-transmitting and reflecting surface 24 of the light guide 20 cannot be sufficiently complemented, and there is a possibility that the light-outgoing direction of the light emitted from the light-outgoing surface 22 of the light guide 20 may not be controlled to a desired direction.

The light transmittance of the light-transmitting and reflecting surface 24 of the light guide 20 can be controlled by, for example, the inclination angle θ1 of the light-reflecting inclined face 25A of each of the groove-like concave parts 25 making up the light-transmitting and reflecting surface 24.

The reflecting plate 30 making up the linear light source unit 10 is composed of a long plate-like member having an overall length fitted to the overall length of the light guide 20 and arranged closely to the light guide 20 and in such a manner that the surface, on which a reflecting surface (hereinafter also referred to as "scattering and reflecting surface") 31 is formed, is opposed to the light-transmitting and reflecting surface 24 of the light guide 20.

The scattering and reflecting surface 31 of this reflecting plate 30 has the construction that irregularities composed of a plurality of groove-like concave parts 33 are formed in parallel with one another in a region opposed to a region, in which the groove-like concave parts 25 in the light-transmitting and reflecting surface 24 of the light guide 20 are formed.

The reflecting plate 30 having such a form preferably has a uniform section in a direction perpendicular to a perpendicular of the light-outgoing surface 22 of the light guide 20, i.e., in a short direction (direction perpendicular to the paper in FIG. 2) of the reflecting plate.

The reflecting plate 30 preferably totally reflects the incident light at each of the plural groove-like concave parts 33 making up the scattering and reflecting surface 31 and has scattering power in a direction toward the light-outgoing surface 22 of the light guide 20.

In the illustrated embodiment, the scattering and reflecting surface 31 is formed on the whole surface opposed to the light-transmitting and reflecting surface 24 of the light guide 20 in the reflecting plate 30.

As the reflecting plate 30, may be used, for example, that obtained by pressing a metal plate such as an aluminum plate or that obtained by forming the scattering and reflecting surface 31 on a surface of a resin-made reflecting plate body, which has been obtained by hot pressing of a resin film or molding with a mold having an expected form, by a vapor deposited metal film or plating.

The reflecting plate 30 may be such that the whole surface opposed to the light-transmitting and reflecting surface 24 of the light guide 20 has reflecting property. However, it is only necessary for at least the groove-like concave parts 33 making up the scattering and reflecting surface 31 to have reflecting property.

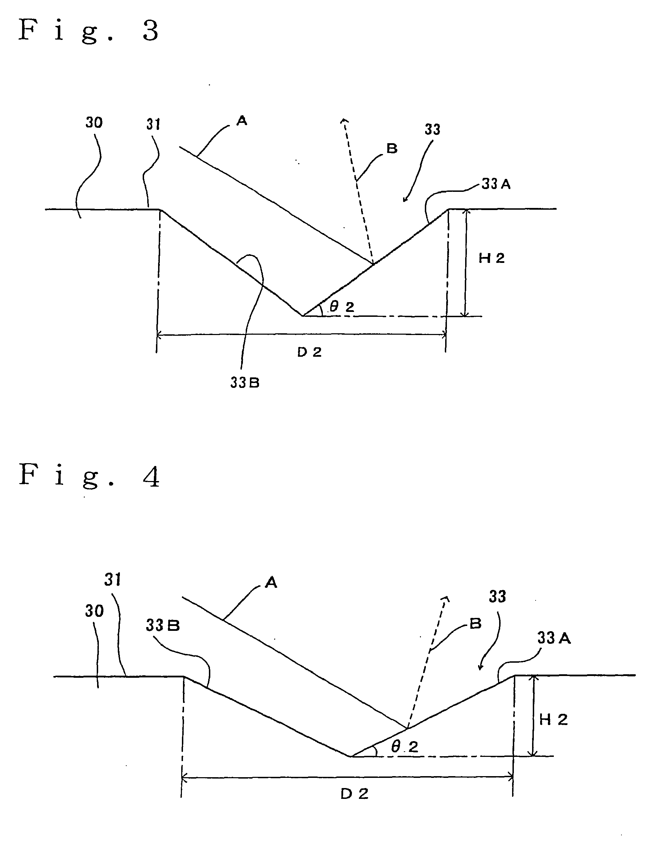

FIG. 3 is a cross-sectional view illustrating, on an enlarged scale, the groove-like concave part 33 in the scattering and reflecting surface 31 of the reflecting plate 30 shown in FIG. 1. In FIG. 3, an optical path A of light incident on an inclined face 33A of the groove-like concave part 33 in the reflecting plate 30 is indicated by a solid line, and an optical path B of reflected light of the light incident on the inclined face 33A is indicated by a broken line.

In the reflecting plate 30, the plural groove-like concave parts 33 making up the scattering and reflecting surface 31 each have a triangular form in the section thereof and extend in a direction perpendicular to the paper in FIG. 2. In the groove-like concave part 33, a light-receiving surface for receiving the light passed through the light-transmitting and reflecting surface 24 of the light guide 20 is formed by an inclined face 33A facing the light source 11, on the side (an upper side in FIG. 2 and a right side in FIG. 3) of the other end surface 21B in the light guide 20. An inclined face 33B of the groove-like concave part 33 on the side (a lower side in FIG. 2 and a left side in FIG. 3) of the light intake end surface 21A in the light guide 20 is formed so as not to interfere with an optical path (the optical path A in FIG. 3) in such a manner that the light passed through the light guide 20 can reach the light-receiving surface compose of the inclined face 33A.

In the groove-like concave part 33, the inclination angle θ2 of the inclined face 33A forming the light-receiving surface is designed in such a manner that the light passed through the light guide 20 is struck on the light-receiving surface, the incident light can be reflected, and the reflected light can be introduced in the interior of the light guide 20 through the light-transmitting and reflecting surface 24 with desired directivity. The inclination angle θ2 of the inclined face 33A in the groove-like concave part 33 is preferably, for example, 48 to 55°.

In the groove-like concave part 33, a ratio (H2/D2) of a maximum depth H2 to an opening width D2 is preferably 1/3 to 1.

FIG. 4 illustrates a case where the ratio (H2/D2) of the maximum depth H2 to the opening width D2 in the groove-like concave part in the scattering and reflecting surface 31 is less than 1/3. In FIG. 4, an optical path A of light incident on the inclined face 33A of the groove-like concave part 33 in the reflecting plate 30 is indicated by a solid line, and an optical path B of reflected light of the light incident on the inclined face 33A is indicated by a broken line.

If the ratio (H2/D2) is less than 1/3, the maximum depth H2 of the groove-like concave part 33 becomes small, and the inclination angle θ2 of the inclined face 33A also becomes small, so that there is a possibility that the light reflected by the inclined face 33A of the groove-like concave part 33 may not have directivity in a direction inclined on the side opposed to the light reflected by the light-transmitting and reflecting surface 24 of the light guide 20.

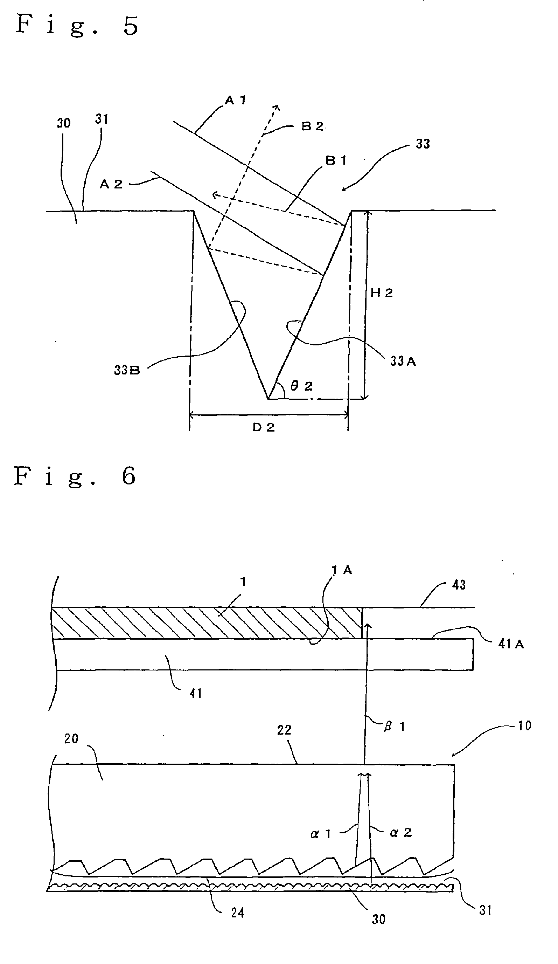

FIG. 5 illustrates a case where the ratio (H2/D2) of the maximum depth H2 to the opening width D2 in the groove-like concave part 33 in the scattering and reflecting surface 31 exceeds 1. In FIG. 5, optical paths A1 and A2 of light incident on the inclined face 33A of the groove-like concave part 33 in the reflecting plate 30 are indicated by solid lines, respectively, and optical paths B1 and B2 of reflected light of the light incident on the inclined face 33A are indicated by broken lines, respectively.

When the ratio (H2/D2) exceeds 1, the maximum depth H2 of the groove-like concave part 33 becomes great, and the inclination angle θ2 of the inclined face 33A also becomes great, so that light (for example, light components related to the optical paths A1 and A2) incident on the light-receiving surface composed of the inclined face 33A varies in a reflecting direction according to the incident depth on the light-receiving surface. Thus, a part (for example, a light component that is reflected light of the light component related to the optical path A1 and a light component related to the optical path B1) of the light reflected by the light-receiving surface composed of the inclined face 33A is totally reflected by the light-transmitting and reflecting surface 24 without being introduced in the interior of the light guide 20 because the angle of incidence on the light-transmitting and reflecting surface 24 of the light guide 20 becomes great. Another part (for example, a light component that is reflected light of the light component related to the optical path A2 and a light component related to the optical path B2) does not have directivity in a direction inclined on the side opposed to the light reflected by the light-transmitting and reflecting surface 24 of the light guide 20 because the light component is reflected even by the inclined face 33B. As a result, there is a possibility that desired directivity may not be achieved in the reflected light by the reflecting plate 30.

The groove-like concave parts 33 preferably have an opening width D2 smaller than the opening width D1 of the groove-like concave parts 25 making up the light-transmitting and reflecting surface 24 of the light guide 20. Specifically, the dimension of the opening width D2 is preferably 0.1 to 10 µm.

If the opening width D2 of the groove-like concave parts 33 is greater than the opening width D1 of the groove-like concave parts 25, unevenness in the intensity of light attributable to the size of the opening width D1 of the groove-like concave parts 25, which is caused in the light reflected by the light-transmitting and reflecting surface 24 of the light guide 20 and emitted from the light-outgoing surface 22, cannot be sufficiently complemented by the reflected light from the reflecting plate 30, so that there is a possibility that the light emitted from the linear light source unit 10 may not have uniformity.

The reflecting plate 30 is preferably such that the light reflected by the scattering and reflecting surface 31 is great in the quantity of light in a direction toward the light intake part of the light guide 20 compared with the light reflected by the light-transmitting and reflecting surface 24 of the light guide 20.

Incidentally, the term "direction toward the light intake part" means a direction inclined on the side of the light intake end surface 21A compared with a direction perpendicular to the light-outgoing surface 22 of the light guide 20.

In the linear light source unit 10 of such construction, the light passed through the light guide 20 in the light-transmitting and reflecting surface 24 is reflected by the reflecting plate 30, and the reflected light is introduced in the interior of the light guide 20 and emitted together with the light reflected by the light-transmitting and reflecting surface 24 from the light-outgoing surface 22 of the light guide 20 to the outside.

As described above, in the linear light source unit 10, the light emitted from the light-outgoing surface 22 in the light guide 20 includes a light component (hereinafter also referred to as "light guide-reflected light component") reflected by the light-transmitting and reflecting surface 24 of the light guide 20 and a light component (hereinafter also referred to as "reflecting plate-reflected light component") passed through the light-transmitting and reflecting surface 24 and reflected by the reflecting plate 30, thereby being introduced in the interior of the light guide 20.

In the linear light source unit 10, the light guide-reflected light component among the light emitted from the light-outgoing surface 22 in the light guide 20 is reflected by the respective light-reflecting inclined faces 25A of the plural groove-like concave parts 25 making up the light-transmitting and reflecting surface 24 of the light guide 20, so that such a light component has directivity in a direction inclined on the side of the end surface 21B of the light guide 20 compared with a direction perpendicular to the light-outgoing surface 22 of the light guide 20, not in the direction perpendicular to the light-outgoing surface 22. On the other hand, the reflecting plate-reflected light component has directivity in a direction inclined on the side of the end surface 21A of the light guide 20 compared with the direction perpendicular to the light-outgoing surface 22 of the light guide 20, i.e., in a direction inclined on a side opposed to the light guide-reflected light component, not in the direction perpendicular to the light-outgoing surface 22 because the reflecting plate 30 has the scattering and reflecting surface 31, in which the plural groove-like concave parts 33 have been formed in parallel with one another, and the light component is reflected by the respective inclined faces 33A of the plural groove-like concave parts 33. In addition, the light-transmitting and reflecting surface 24 transmits at least 60% of the quantity of light of the light incident on the light guide 20 from the light source 11, so that the quantity of light of the light incident on the scattering and reflecting surface 31 of the reflecting plate 30 becomes great. Further, since the scattering and reflecting surface 31 has reflecting property, the light passed through the light guide 20 and incident on the reflecting plate 30 is reflected toward the light-outgoing surface 22 of the light guide 20 with high efficiency by the reflecting plate 30. As a result, the reflecting plate-reflected light component comes to have a sufficient quantity of light in relation to the quantity of light of the light guide-reflected light component.

Accordingly, according to the linear light source unit 10, even when the light guide-reflected light component has directivity in the direction inclined on the side of the end surface 21B of the light guide 20 compared with the direction perpendicular to the light-outgoing surface 22 of the light guide 20, the light-outgoing direction of the light emitted from the light-outgoing surface 22 of the light guide 20 can be controlled by complementing the reflecting plate-reflected light component having directivity in the direction inclined in the side opposed to the light guide-reflected light component, i.e., in the direction inclined on the side of the end surface 21A of the light guide 20, which makes up the light intake part, by the reflected light from the reflecting plate 30, thereby emitting the light in a direction perpendicular to the light-outgoing surface 22 of the light guide 20.

In this linear light source unit 10, the reflecting plate 30 can be controlled in such a manner that the quantity of light in a direction toward the light intake part of the light guide 20 in the light reflected by the scattering and reflecting surface 31 is great compared with the light reflected by the light-transmitting and reflecting surface 24, thereby sufficiently complementing the light having desired directivity by the reflecting plate 30, so that light having a uniform light-outgoing direction can be emitted.

Such a linear light source unit 10 as described above can be suitably used as a light source for illumination for an image reader provided in a facsimile, copying machine, image scanner, bar code reader or the like.

FIG. 6 illustrates the construction of an exemplary image reader according to the present invention. In the drawing, character α1 indicates a light component (light guide-reflected light component) reflected by the light-transmitting and reflecting surface 24 of the light guide 20, and character α2 designates a light component (reflecting plate-reflected light component) passed through the light-transmitting and reflecting surface 24 and reflected by the reflecting plate 30, thereby being introduced in the interior of the light guide 20.

This image reader has such construction that an object 1 of image reading is placed on a plate-like table 41 composed of a light-transmitting member with an image-reading surface 1A of the object downward, this object 1 of image reading is pressed by a cover 43 for object of image reading, and in this state, the object 1 of image reading is illuminated by light from a light source for illumination composed of the linear light source unit 10 provided below the table 41. In the image reader of such construction, a projected image of the image-reading surface 1A of the object coming into contact with an upper surface (upper surface in FIG. 6) of the table 41 in the object 1 of image reading is detected, thereby providing a read image.

In this image reader, the linear light source unit 10 is used as the light source for illumination, so that light (for example, β1) emitted from the light source for illumination to the image-reading surface 1A of the object 1 of image reading has an illuminating direction in a direction perpendicular to the image-reading surface 1A of the object. As a result, the light is struck on the image-reading surface 1A of the object, and on the other whole region than the region coming into contact with the image-reading surface 1A of the object on a lower surface (lower surface in FIG. 6) of the cover 43 for object of image reading even when the object 1 of image reading has a large thickness. Accordingly, according to this image reader, shade of the object 1 of image reading is not formed on the lower surface of the cover 43 for object of image reading, and the resulting read image is prevented from causing black stripes, which are not present in the object 1 of image reading, due to the shade of the object 1 of image reading, and so a read image having high quality can be provided.

The present invention is not limited to the embodiments described above, and various changes or modifications can be added thereto.

For example, the construction of the reflecting plate is not limited to the construction illustrated in FIG. 1 so far as the irregularities are formed in parallel with one another in the surface opposed to the light-transmitting and reflecting surface of the light guide.

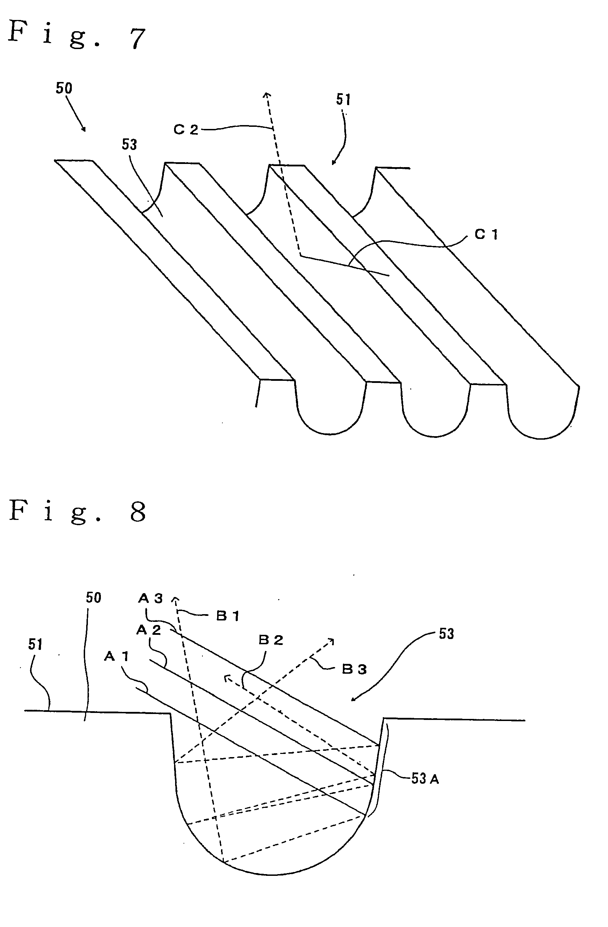

As a specific example, the reflecting plate may be a reflecting plate 50, in which irregularities composed of groove-like concave parts 53 making up a scattering and reflecting surface 51 each have a substantially U-shaped sectional form, and the bottom face thereof is curved as illustrated in FIG. 7 and FIG. 8.

In the linear light source unit equipped with the reflecting plate 50 of such construction, light (for example, light components related to optical paths A1 to A3) incident on a light-receiving surface formed by a flat surface region 53A facing the light source on the side (a right side in FIG. 8) of an end surface opposed to the end surface making up the light intake part of the light guide in the groove-like concave part 53 varies in a reflecting direction according to the incident depth on the groove-like concave part 53 because the maximum depth of the groove-like concave part 53 forming the scattering and reflecting surface 51 of the reflecting plate 50 is great, and the bottom face thereof is curved. In addition, since the reflected light thereof is reflected again within the groove-like concave part 53, scattering and reflecting are caused, and the scattered and reflected light has directivity in a direction (direction inclined on the side of the end surface forming the light intake part of the light guide) opposed to the light reflected by the light-transmitting and reflecting surface of the light guide, so that the light-outgoing direction of the linear light source unit can be made more perpendicular to the light-outgoing surface of the light guide. When light (for example, light related to an optical path C1) parallel with the flat surface region 53A of the groove-like concave part 53 forming the scattering and reflecting surface 51 is incident on the groove-like concave part 53, such light is mirror-reflected by the groove-like concave part 53, so that the light from the light source can be more effectively utilized.

In FIG. 7, an optical path C1 of light parallel with the flat surface region 53A of the groove-like concave part 53 is indicated by a solid line, an optical path C2 of the reflected light of the light incident on the groove-like concave part 53 is indicated by a broken line. In FIG. 8, optical paths A1 to A3 of light passed through the light-transmitting and reflecting surface of the light guide and incident on the flat surface region 53A of the groove-like concave part 53 in the reflecting plate 50 are indicated by solid lines, respectively, and optical paths B1 to B3 of reflected light of the light passed along the optical paths A1 to A3 and incident on the flat surface region 53A are indicated by broken lines, respectively.

## Claims

1. A linear light source unit comprising a light guide having a light intake part formed at one end surface thereof and a light-transmitting and reflecting surface made up by a plurality of groove-like concave parts formed in parallel with one another and arranged in a longitudinal direction on a peripheral surface thereof, a light source provided so as to be opposed to the light intake part, and a reflecting plate provided so as to be opposed to the light-transmitting and reflecting surface of the light guide,
wherein in the reflecting plate, a surface opposed to the light-transmitting and reflecting surface is a reflecting surface, in which irregularities have been formed in parallel with one another.

2. The linear light source unit according to claim 1, wherein the light-transmitting and reflecting surface of the light guide transmits at least 60% of the quantity of light of the light incident on the light guide from the light source.

3. The linear light source unit according to claim 1 or 2, wherein the irregularities in the reflecting surface of the reflecting plate are composed of groove-like concave parts each having an opening width of 0.1 to 10 µm.

4. The linear light source unit according to any one of claims 1 to 3, wherein the light reflected by the reflecting plate is great in the quantity of light in a direction toward the light intake part compared with the light reflected by the light-transmitting and reflecting surface of the light guide.

5. The linear light source unit according to any one of claims 1 to 4, wherein an end surface opposed to the light intake part in the light guide has reflecting property.

6. An image reader comprising the linear light source unit according to any one of claims 1 to 5 as a light source for illumination.
